(19) Europäisches Patentamt
European Patent Office
Office européen des brevets

(11) Numéro de publication : **0 291 366 B1**

(12) **FASCICULE DE BREVET EUROPEEN**

(45) Date de publication du fascicule du brevet :
07.08.91 Bulletin 91/32

(51) Int. Cl.$^5$ : **G01K 11/00, G01D 5/26,
G01B 9/02, G01K 13/02**

(21) Numéro de dépôt : 88400660.2

(22) Date de dépôt : 18.03.88

(54) Interféromètre de Michelson à fibres optiques et son application notamment à la mesure des températures.

(30) Priorité : 24.03.87 FR 8704089

(43) Date de publication de la demande :
17.11.88 Bulletin 88/46

(45) Mention de la délivrance du brevet :
07.08.91 Bulletin 91/32

(84) Etats contractants désignés :
BE CH DE ES GB IT LI LU NL SE

(56) Documents cités :
EP-A- 0 211 804
WO-A-85/03124
WO-A-87/01438
US-A- 4 596 466
PATENT ABSTRACTS OF JAPAN, vol. 5, no.
182 (P-90)[854], 20 novembre 1981; & JP-A-56
111 417

(73) Titulaire : ELECTRICITE DE FRANCE Service
National
2, rue Louis Murat
F-75008 Paris (FR)

(72) Inventeur : Ferdinand, Pierre
17 rue de Strasbourg
F-78800 Houilles (FR)
Inventeur : Liu, Chieh
212 rue de Tolbiac
F-75013 Paris (FR)

(74) Mandataire : Mestre, Jean et al
c/o CABINET LAVOIX 2, place d'Estienne
d'Orves
F-75441 Paris Cédex 09 (FR)

## Description

La présente invention est relative à la métrologie et, plus particulièrement, à la métrologie qui fait appel à des techniques optiques interféromètriques. L'invention se rapporte plus particulièrement à un interféromètre de Michelson à fibres optiques perfectionné et à son application notamment à la mesure des températures dans des écoulements par exemple à l'intérieur des turbomachines.

La métrologie qui fait appel à l'interféromètrie est bien connue. Cette technique qui met en oeuvre des interférences qui sont produites entre une onde de référence et une onde de mesure, qui est perturbée par le phénomène à étudier, est caractérisée par sa très grande sensibilité.

Depuis que les fibres optiques sont utilisables à des fins techniques, on a déjà proposé de s'en servir pour réaliser des interféromètres de Michelson ou de Mach-Zehnder par exemple. L'usage de fibres optiques pour des interféromètres a permis de construire des appareils qui sont insensibles aux champs électromagnétiques, qui présentent de faibles pertes de propagation, qui sont pratiquement immunisés contre les attaques chimiques et qui, de plus, offrent des dimensions compactes et une masse réduite.

Comme on le sait, l'interféromètrie permet de traduire une différence de marche optique entre une onde de référence et une onde de mesure en différence de phase. Cette différence de phase $\varphi$ est égale à

$$\varphi = 2\,\pi\frac{\Delta}{\lambda}$$

où :  $\lambda$ est la longueur d'onde du rayonnement utilisé,
$\Delta$ est la différence de marche optique avec $\Delta = n\ell$
n étant l'indice de réfraction du milieu et $\ell$ la différence géométrique entre les chemins optiques des ondes de référence et de mesure dans leur bras respectif.

Dans le cas où on met en oeuvre un bras de référence (r) et un bras de mesure (m) on a en toute rigueur $\Delta = n_r\ell_r - n_m\ell_m$.

Tout phénomène qui a une action sur la différence géométrique l des deux chemins optiques et/ou sur l'indice de réfraction $n_m$ du bras de mesure ou sur l'indice du bras de référence se traduit donc par une variation de la différence de marche optique. On utilise cette propriété pour mettre en évidence des phénomènes physiques en particulier des variations de température.

Afin de se prémunir contre des perturbations qui peuvent affecter le bras de référence et le bras de mesure en dehors de la zone de mesure c'est-à-dire la tête optique et ainsi fausser les résultats, on a déjà proposé d'utiliser, pour la constitution des bras, des fibres optiques qui sont associées les unes aux autres à l'aide de coupleurs optiques qui jouent le rôle des lames séparatrices, semi-réfléchissantes et semi-transparentes, habituellement utilisées dans les interféromètres traditionnels. On peut alors réunir la fibre optique du bras de référence et la fibre optique du bras de mesure de manière que celles-ci soient soumises au même environnement sur la majeure partie de leur longueur et que seul le tronçon extrêmal, voisin de la partie terminale libre, de la fibre optique du bras de mesure soit soumis au phénomène que l'on veut évaluer. Les deux dioptres des tranches terminales des fibres optiques du bras de mesure et du bras de référence servent de miroirs ; pour cela ils sont habituellement métallisés par toute technique classique appropriée.

Ce type d'interféromètre de Michelson à fibres optiques est délicat de mise en oeuvre et la qualité des mesures ne répond pas aux performances théoriques qu'on est en droit d'espérer.

En effet, même si les deux fibres du bras de mesure et du bras de référence traversent côte à côte des milieux analogues, à l'exception de la partie terminale de l'une d'elles, elles manifestent des perturbations différentielles particulières qui leur sont propres et qui sont dues à la température ambiante, aux contraintes mécaniques qui s'exercent sur elles, par exemple. Ces manifestations parasites ne font que traduire des hétérogènéités des fibres optiques et/ou du milieu ambiant. Il faut en particulier obtenir des températures notamment au coeur des fibres optiques qui soient particulièrement bien stabilisées. Si l'on veut obtenir une bonne sensibilité, des calculs montrent qu'il faut que la température des deux fibres optiques soit stabilisée à mieux que 0,2 K et que la différence des longueurs des fibres optiques des deux bras ne dépasse pas 3,50 mm.

Ces difficultés sont tout particulièrement gênantes lorsqu'on veut utiliser un interféromètre à fibres optiques et, en particulier un interféromètre de Michelson, pour faire des mesures de température.

Comme on le sait, la température qu'on veut mesurer d'un fluide en écoulement, et en particulier d'un gaz dans une veine de mesure où le fluide est animé d'une certaine vitesse, est inférieure à la température réelle de la sonde car l'échauffement parasite de la sonde dû à l'écoulement lui même est proportionnel au carré de la vitesse du fluide. Lorsque la veine est parcourue par un fluide animé d'une vitesse relativement grande, on voit que cet écart peut être relativement important.

On voit donc la difficulté de la mesure de la température à l'aide d'une sonde plongée directement dans le fluide qu'on étudie ; c'est pourquoi on utilise une technique interférométrique donc sans contact physique avec le milieu à ausculter qui permet de traduire des changements de température en variations d'indice de réfraction du milieu.

La mesure des températures d'un fluide en écoulement se pose par exemple en particulier à propos des turbomachines utilisées pour la production d'énergie électrique où le fluide est de la vapeur d'eau dans laquelle se trouve, parfois, en suspension des gouttelettes et où il faut disposer d'une sonde miniature pour ne pas perturber l'écoulement et aussi du fait du manque de place disponible.

L'état de la technique est, par exemple, illustré par le document EP-A-0211804. Selon ce document, on utilise une cavité résonante du type Pérot-Fabry utilisant une fibre optique unique dont la longueur et l'indice de réfraction, qui changent en fonction de la grandeur recherchée, induisent une variation d'intensité lumineuse.

Le but de l'invention est de remédier aux inconvénients précédemment indiqués de la technique connue.

L'invention a pour objet un interféromètre de Michelson à fibres optiques de préférence monomodes (ou unimodales) où un bras émetteur excité par une source lumineuse et un bras récepteur associé à un photodétecteur sont réunis par un coupleur optique monomode pour former un bras de référence et un bras de mesure terminé par un capteur du phénomène physique à évaluer, du type indiqué dans le préambule de la revendication principale.

Les particularités distinctives de cette invention ressortent notamment de la partie caractérisante de cette revendication.

L'interféromètre selon l'invetnion trouve en particulier une application notamment à la mesure des températures et par exemple de celles qui règnent dans des turbomachines.

D'autres caractéristiques de l'invention, apparaîtront à la lecture de la description et des revendications qui suivent et à l'examen du dessin annexé, donné seulement à titre d'exemple, où :

— la Fig. 1 est une vue schématique d'un mode de réalisation d'un interféromètre de Michelson à fibres optiques selon la technique antérieure ;

— la Fig. 2 est est une vue analogue à celle de la Fig. 1 d'un interféromètre de Michelson à fibres optiques perfectionné selon l'invention ;

— la Fig. 3 est une vue schématique illustrant certaines des caractéristiques qui sont propres à l'invention ;

— la Fig. 4 est une coupe longitudinale simplifiée d'un mode de réalisation d'un capteur d'un interféromètre de Michelson à fibres optiques selon l'invention qui se présente sous la forme d'une canne sonde cylindrique ; et

— la Fig. 4A est une vue extérieure, tournée d'un quart de tour, du mode de réalisation de la Fig. 4, montrant la configuration de la cellule du capteur.

Les interféromètres et en particulier ceux utilisant les fibres optiques sont bien connus dans la technique. C'est notamment le cas, lorsque ces interféromètres sont construits suivants la configuration connue sous le nom de Michelson. C'est pourquoi, on ne s'étendra pas longuement sur ce qui est classique et on ne fera ressortir que ce qui caractérise l'invention.

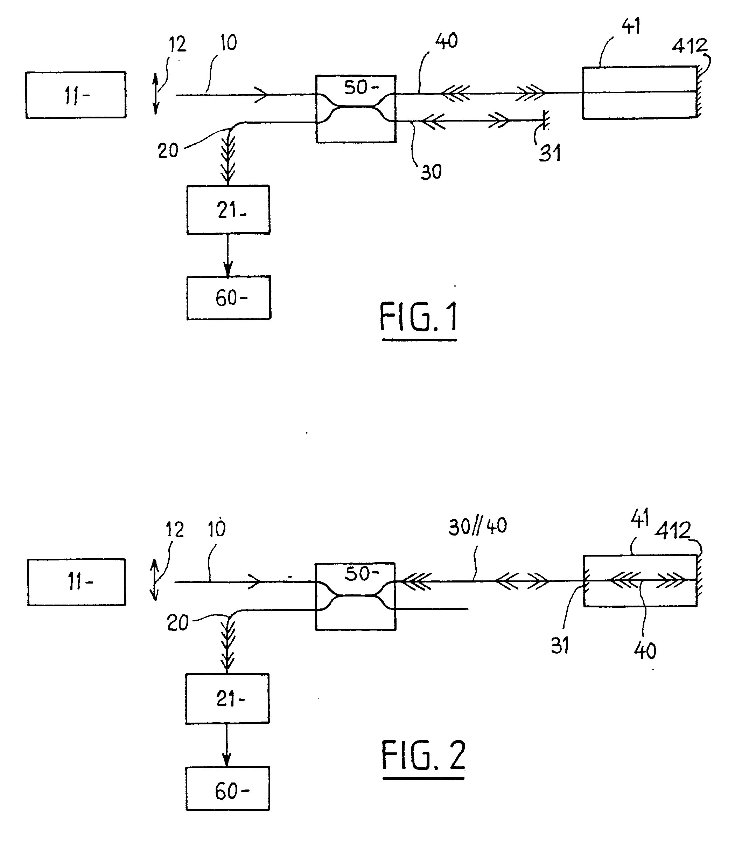

Sur la Fig. 1, on a représenté, schématiquement, un interféromètre de Michelson à fibres optiques monomodes. Cet interféromètre comprend un bras émetteur 10 dont une des extrémités est excitée par une source lumineuse 11 tel qu'un laser dont l'émission est, si besoin, focalisée grâce à une optique 12 sur l'extrémité libre d'une fibre optique. Cet interféromètre comprend, aussi un bras récepteur 20, fait d'une fibre optique, associé à un photodétecteur 21. Les fibres optiques du bras émetteur 10 et du bras récepteurs 20 sont réunies localement l'une à l'autre grâce à un coupleur optique 50 de manière à former un bras de référence 30 et un bras de mesure 40 qui se termine par un capteur 41 sensible au phénomène physique à évaluer (température, pression, densité..). Comme il est classique, les bras de mesure et de référence sont agencés de manière que les dioptres à l'extrémité libre des fibres optiques concernées se comportent à la manière d'un miroir totalement réfléchissant, comme cela est schématisé.

Le coupleur optique 50 joue le rôle d'une lame séparatrice semi-transparente et semi-réfléchissante habituelle. La manière dont les coupleurs optiques sont fabriqués, est classique. Ils sont obtenus, par exemple, par décapage et polissage local fin puis mise en contact ou bien par fusion localisée. L'onde optique de référence (> >) et l'onde de mesure (>>>) obtenues par séparation de l'onde incidente (>) dans le coupleur se recombinent, après réflexion dans le coupleur et elles interfèrent pour former des franges d'interférence qui sont transmises par la fibre optique du bras récepteur 20 d'où elles sont détectées par le photodétecteur 21 dont le signal est envoyé à un circuit électrique 60 qui permet de l'exploiter.

On se reportera maintenant à la Fig. 2, où est représenté un interféromètre de Michelson à fibres optiques perfectionné selon l'invention.

Sur cette figure, les éléments constitutifs homologues sont désignés par le même numéro de référence.

En examinant cette figure, on voit immédiatement que les bras de référence 30 et de mesure 40 sont réunis en une même fibre optique 30/40 dont l'extrémité 31 n'est plus un dioptre totalement réfléchissant mais partiellement tel. Cette extrémité est finement polie ; si elle est placée dans l'air et si son indice de réfraction est de 1,5, elle présente un facteur de réflexion, comme connu, de l'ordre de 4%. Il est clair que cette valeur peut être modifiée par un traitement approprié, par exemple en déposant sous vide des couches minces de substances pour avoir la valeur recherchée.

Une partie (> >) de l'onde incidente (>) est réfléchie sur le dioptre de l'extrémité (31) et forme l'onde de référence et le reste (> > >) de l'onde se propage ensuite dans le capteur 41 où elle est totalement réfléchie sur le miroir terminal 412 et forme l'onde de mesure, comme il est classique.

On voit donc que dans cette solution perfectionnée suivant l'invention, la fibre optique unique 30/40 véhicule à la fois l'onde de référence (> >) et l'onde de mesure (> > >) qui interfèrent.

Si l'extrémité 31 a le facteur de réflexion que l'on vient d'indiquer, l'onde de référence et l'onde de mesure ont des intensités dissemblables qui sont dans le rapport de 4/96 environ ; ceci n'est pas favorable à une bonne visibilité des franges qui sont alors relativement peu contrastées. C'est pourquoi on a indiqué que le dioptre terminal de l'extrémité 31 pouvait être traité.

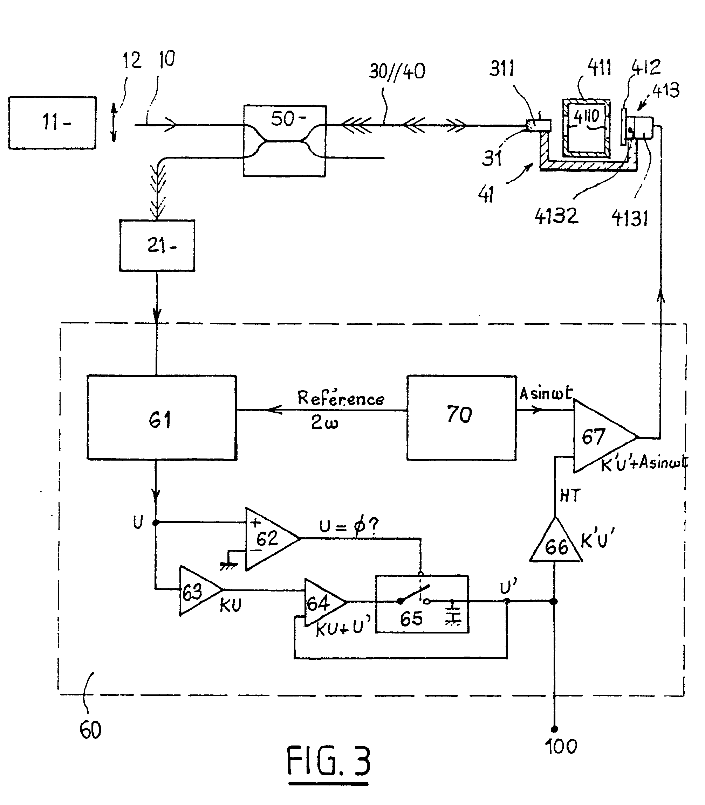

Suivant l'invention, la fibre optique unique 30/40 se termine par le capteur 41 qui comprend une cellule 411 qui présente deux faces opposées délimitées par des dioptres 4110 transparents, parallèles entre eux et entre lesquels se manifeste le phénomène physique à évaluer ; ces dioptres 4110 sont aussi, de préférence, parallèles à l'extrémité 31 de la fibre optique qui sert partiellement de miroir. Si besoin est, l'extrémité 31 est associée au capteur 41 par l'intermédiaire d'un élément optique approprié 311, par exemple un collimateur telle une lentille "Selfoc" de la société Nippon Sheet Glass Co, Ltd. Cet élément optique a pour but de rendre parallèle le faisceau divergent sortant de la fibre et de l'y réinjecter après réflexion sur le miroir. On peut utiliser tout autre élément optique classique mais celui retenu convient bien à cause de sa petitesse, le faisceau en sortant présentant un diamètre de 1,8 mm environ. Le miroir 412, parallèle à l'extrémité 31 de la fibre optique, est utilisé pour renvoyer l'onde de mesure (> > >) sur cette extrémité. Comme on le voit sur la Fig. 3, la cellule 411 est interposée entre l'extrémité 31 et le miroir 412. Dans la cellule circule, par exemple, le fluide dont on veut mesurer la température. Comme on le sait, la température modifie l'indice de réfraction du milieu et il suffit de suivre les modifications du réseau de franges d'interférence pour mesurer les changements de l'indice et donc d'en déduire les variations de température. En effet,

$$\frac{d\varphi}{dT} = k\frac{d\Delta}{dT} = k\frac{d\Delta'}{dT} = k[n\frac{d\ell}{dT} + \ell\frac{dn}{dT}]$$

où $\Delta'$ représente la différence de marche optique dans la seule tête de mesure, le reste étant rigoureusement identique pour les deux trajets donc sans influence. Il suffit de maintenir $\ell$ insensible à la température.

On voit donc que grâce à l'invention l'interféromètre de Michelson ne comprend plus qu'un seul bras physique qui est constitué par une seule et même fibre 30/40. On saisit donc pourquoi tous les problèmes différentiels qui pouvaient exister entre les fibres du bras de mesure 40 et du bras de référence 30 des interféromètres de Michelson classiques sont supprimés puisqu'on n'utilise qu'une fibre unique où les anomalies affectent rigoureusement également l'onde de référence (> >) et l'onde de mesure (> > >) qui la traversent identiquement.

En outre, on remarquera que puisque le capteur est traversé deux fois par l'onde de mesure (> > >), on bénéficie d'une amplification de facteur 2.

L'interféromètre étant sensible à la différence des chemins optiques entre les ondes de mesure et de référence, tous les effets perturbateurs dûs à l'environnement et agissant sur la fibre sont éliminés puisque les ondes de référence et de mesure les subissent simultanément et pareillement. On peut donc grâce à l'invention détecter la variation du chemin optique due au seul capteur et cela indépendamment de l'environnement.

Pour encore améliorer la sensibilité de cet interféromètre perfectionné selon l'invention il est particulièrement avantageux que le capteur 41 soit associé à un modulateur de phase 413. Dans ce cas, le miroir 412 est monté sur une céramique piézo-électrique 4131 commandée par un générateur basse fréquence 70, par exemple à 20 kHz.

Pour obtenir les résultats optimaux, on utilise une détection synchrone à zéro dynamique des signaux optiques qui est assurée par un circuit électrique 60 auquel est associé le générateur 70.

Le circuit 60 comprend un amplificateur à verrouillage de phase 61, un comparateur 62, un amplificateur à gain variable 63, un additionneur 64, une mémoire analogique 65, un amplificateur opérationnel 66 et un additionneur 67.

Pour ce faire, on extrait du signal reçu par le photodétecteur 21 une composante dont la fréquence est double de celle de la modulation de phase basse fréquence due au générateur 70 et on en mesure l'intensité ; ceci produit une détection synchrone.

Cette intensité mesurée est ensuite mise en forme et réinjectée, sous forme d'une haute tension, dans la céramique piézo-électrique du modulateur afin de compenser automatiquement les variations de chemins optiques induites thermiquement dans la veine. La sensibilité de l'interféromètre selon l'invention est ainsi constante et optimale car il opère suivant une méthode de zéro.

Le signal émis par le photodétecteur 21 qui est excité par les franges d'interférence est traité comme il suit.

Le signal I(t) reçu par la photodiode 21 est de la forme :

$$I(t) = I_0' + I_0 \cos(\Delta\varphi + \alpha\cos\omega t) \quad (1)$$

où $\alpha$, $\omega$ sont l'amplitude et la fréquence de la modulation de phase basse fréquence,

$\Delta \varphi$ est la différence de phase globale, somme de la différence de phase initiale $\Delta \varphi_0$ des deux ondes de l'interféromètre et du déphasage $\Delta \varphi_T$ créé par la variation de température dans la tête de mesure.

En développant la relation (1) en série de Fourier, on obtient les termes du premier et du deuxième harmoniques :

$$I_1 (t) = 2 I_0 J_1 (\alpha) \sin \Delta \varphi \cdot \cos \omega t$$

$$I_2 (t) = - 2 I_0 J_2 (\alpha) \cos \Delta \varphi \cdot \cos 2 \omega t$$

où $J_1 (\alpha)$, $J_2 (\alpha)$ sont des fonctions de Bessel.

Pour $t = 0$ (pas de variation de température à l'origine), on a $\Delta \varphi = \Delta \varphi_0$. En ajustant la position moyenne de la céramique piézo-électrique autour de laquelle elle oscille avec une tension $V_0$, on peut écrire

$$\Delta \varphi_I = 2 n \pi + \frac{\pi}{2} \quad (n = 0, \pm 1, \pm 2,...).$$

Dans ce cas, $I_2 (t)$ est égal à zéro.

Pour $t > 0$ (une variation de température $\Delta T$ se manifeste ultérieurement dans la tête de mesure du capteur), on obtient une valeur de $\Delta \varphi_T$ différente de zéro, donc

$$\Delta \varphi = 2 n \pi + \frac{\pi}{2} + \Delta \varphi_T.$$

et $A_2$ l'amplitude du terme en $2 \omega$ s'écrit sous forme :

$$A_2 = - 2 I_0 J_2 (\alpha) \cos (2 n \pi + \frac{\pi}{2} + \Delta \varphi_T) = 2 I_0 J_2 (\alpha)$$
$$\sin \Delta \varphi_T \quad (2)$$

Pour détecter cette différence de phase supplémentaire $\Delta \varphi_T$ on ajoute, ou soustrait, une tension $\Delta V$ appliquée à la céramique piézo-électrique de façon que $A_2$ soit toujours égale à zéro.

Cette tension $\Delta V$, signal de contre-réaction permet de connaître, à un coefficient près, la variation de température $\Delta T$ dans la cellule de mesure du capteur 41.

Les avantages de la technique de détection synchrone à zéro dynamique selon l'invention est de présenter une sensibilité constante et maximale ainsi qu'une plage de mesure très étendue.

Cette technique de détection synchrone à zéro dynamique est conduite à l'aide du circuit 60 dont un mode de réalisation particulier comprend les constituants suivant qui opèrent comme indiqué.

Le générateur basse fréquence 70 alimente en permanence la céramique piezo-électrique 4131 avec un signal sinusoïdal de la forme A sin (2 ft) via le circuit additionneur 67. On choisit f très voisine de 20 kHz pour assurer la modulation de phase nécessaire à la détection du signal.

La fréquence de 20 kHz n'est absolument pas critique, elle peut être choisie autre à condition que la céramique piezo-électrique puisse répondre à la fréquence choisie et que l'amplificateur à verrouillage de phase 61 puisse se verrouiller sur 2f, double de cette fréquence. Le choix de 20 kHz provient du fait que cette fréquence est facilement "traitable" électroniquement et qu'elle n'est pas "trop basse", ce qui augmenterait le temps de réponse du capteur.

La référence émise par le générateur 70 est en fait une référence de fréquence du même type que précédemment

$$A \sin (2 \pi ft).$$

En général lorsqu'on utilise un générateur du commerce pour 70, on se sert de la sortie "synchro" comme référence de fréquence ; ceci n'est pas obligatoire car le signal de référence peut provenir exactement de la même sortie que le premier signal utilisé pour commander la céramique piezo-électrique 4131.

On observera que l'amplificateur à verrouillage de phase 61 dans le montage retenu, se verrouille sur 2 f, double de la fréquence délivrée par le générateur 70. Dans le cas où l'amplificateur à verrouillage de phase 61 ne possède pas de façon interne la possibilité de se verrouiller sur l'harmonique 2 du signal de référence il convient d'intercaler entre le générateur 70 et l'amplificateur 61 un circuit doubleur de fréquence classique.

L'amplificateur à verrouillage de phase 61 (ou détection synchrone d'amplitude ou encore, lock-in) accepte plusieurs formes de signaux de référence de fréquence (par exemple carré, sinusoïdal,...). Son rôle est de créer un filtre très étroit autour de la fréquence de référence et de délivrer l'amplitude du signal à cette fréquence de référence et de délivrer l'amplitude du signal à cette fréquence contenu dans le signal imposé en entrée du circuit. On utilise un appareil du commerce, mais rien n'empêche de réaliser une carte spécialisée remplissant ce rôle.

Le comparateur 62 est, en fait, une association de deux comparateurs électroniques (de type LM 208 ou analogue) qui surveillent la tension de sortie de l'amplificateur 61 qui doit rester nulle. Si cette condition n'est pas respectée, les comparateurs commandent le dispositif de rattrapage d'erreur (63,64, 65 et 66).

L'amplificateur à gain variable 63 permet d'obtenir un asservissement optimum. On utilise un circuit du type EXAR Integrated System Incorporation XR 2208 ou analogue.

L'additionneur 64 est un circuit sommateur de type A 741 ou similaire.

La mémoire analogique 65 (sample and hold) est par exemple de type DATEL SHM 20 ou similaire validée pour le comparateur 62. Elle délivre une tension égale à celle délivrée par l'additionneur plus une tension proportionnelle à V.

La haute tension délivrée par l'amplificateur opérationnel 66 est un signal de contre-réaction qui n'est donc pas à proprement parlé un signal de forme pure (sinus, carré...) mais plutôt un "niveau continu" qui évolue constamment en fonction du signal délivré par l'amplificateur à verrouillage de phase 61. La sortie 100 est une borne de prise de mesures.

La tension Vo est la tension continue délivrée par l'additionneur 67 au temps t = 0, lorsqu'on suppose absentes les variations de températures induites dans la tête de mesure. ΔV est le signal de contre-réaction généré par toute la chaîne de contre réaction et l'additionneur 67. Ce signal est ajouté ou soustrait à la tension précédente (Vo à l'origine) afin de compenser en permanence les variations de températures induites dans la tête de mesure.

L'amplificateur opérationnel 66 est un convertisseur continu/continu haute tension de marque RCA type PF 1041 P.

L'additionneur 67 est construit à l'aide de composants passifs.

Pour obtenir des mesures de bonne qualité qui soient fiables et sensibles, il est nécessaire que le capteur 41 présente une très grande stabilité physique dimensionnelle pour s'affranchir des effets thermiques qui agissent en particulier sur l'écartement des deux dioptres 4110 opposés de la cellule 411.

On utilise par exemple des supports en Invar et on autocompense les variations thermiques dues au changement de longueur et d'indice des composants entrant dans la composition de la tête de mesure ("Selfoc", hublots, miroir,...) par la dilatation thermique de la céramique piezo-électrique qui agit en sens inverse. Si ceci s'avère insuffisant, on interpose entre le miroir et la céramique piezo-électrique, un cale 4132 d'un métal convenablement choisi (A1 par exemple) dont l'épaisseur est calculée afin d'annuler les variations thermiques de la cellule. En fait on réalise :

$\dfrac{d}{dT}$ (indice et longueur de "Selfoc", hublots, air extérieur, miroir)

$= \dfrac{d}{dT}$ (céramique piezo-électrique + cale en A1)

On a utilisé l'interféromètre perfectionné selon l'invention pour faire les mesures de température dans une veine où circule de la vapeur d'eau. On a obtenu une précision de mesure de la température de l'ordre du demi-degré et un temps de réponse relativement rapide, inférieur à une seconde environ. Ces performances ont été obtenues pour une plage de mesure de l'ordre de 50°, pour des températures comprises entre 10°C et 60°C environ. Il est aisé d'augmenter cette plage de mesure électroniquement par un décalage d'origine : lorsqu'on arrive à une limite (supérieure par exemple) de la plage de mesure, on introduit un décalage (off set) de une demi-plage de mesure vers le bas, on recale donc le point de fonctionnement au milieu de la nouvelle zone de mesure. Ainsi, il est facile d'obtenir une plage de mesure aussi grande qu'on désire. Mais il est clair que rien ne s'oppose à l'utilisation de cet interféromètre pour d'autres, et avec des amplitudes différentes plages avec la même précision et avec le même temps de réponse.

Le capteur proprement dit pouvant être construit sous une forme très ramassée, on comprend qu'il est facile de l'insérer par exemple dans une turbomachine dont il ne perturbe pas l'écoulement, pour connaître le champ de ses températures internes afin d'apprécier le répartition réelle et l'importance des pertes. De telles informations permettent de mieux modéliser les phénomènes afin d'optimiser les matériels.

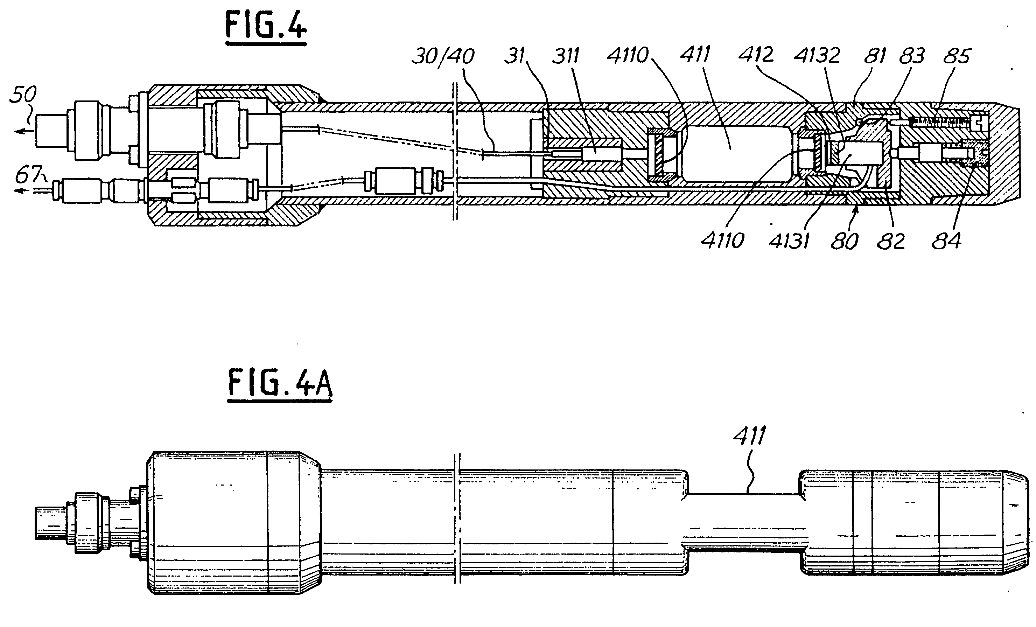

La Fig.4 illustre un mode de réalisation d'un capteur d'un interféromètre de Michelson à fibres optiques selon l'invention. Ce mode de réalisation se présente sous la forme d'une canne-sonde cylindrique dont le diamètre extérieur maximal est de l'ordre de 25 mm environ et dont la longueur, suivant les versions, peut varier entre 2,1 m et 3,6 m environ.

Cette figure représente une coupe longitudinale simplifiée. Les assemblages et montages mécaniques sont classiques et comportent des joints d'étanchéités aux endroits appropriés ; de même les liaisons électriques et optiques sont assurées à l'aide de connecteurs traditionnels. Les spécialistes en la matière sont à même de choisir les solutions qui conviennent aux buts et applications visés ainsi que les éventuels traitements chimiques et/ou thermiques des constituants. C'est pourquoi on limitera la description de ce mode de réalisation particulier à ce qui concerne directement l'invention.

Comme on le voit, le capteur 41 comprend une cellule 411 faite par exemple en Invar supérieur. Dans cette cellule sont montés les dioptres 4110 à l'aide de barillet et de bague de serrage et interposition d'un joint ; ce type de montage est classique en optique c'est pourquoi ces constituants ne sont pas référencés. Bagues et barillets sont, par exemple faits en Invar supérieur et le joint en "Teflon".

Les dioptres 4110 sont des hublots faits de lames à faces parallèles de 1 mm d'épaisseur et de 9 mm de diamètre environ. Ces lames sont polies et dressées et l'homogénéité du matériau choisie de manière qu'elles présentent la qualité optique interférométrique requise. On utilise par exemple des verres spéciaux SCHOTT AK 11 et AF 22 qui présentent des constantes thermo-optiques $\underline{G}$ opposées

$$G = \alpha\,(n-1) + \dfrac{dn}{dT}$$

Ainsi les variations d'indice et d'épaisseur des hublots résultant d'éventuels gradients thermiques qui pourraient perturber le chemin optique sont elles éliminées.

Le modulateur de phase 413, avec sa céramique piézo-électrique 4131 et sa cale 4132, et le miroir 412 sont placés dans une monture 80. Cette monture 80 est constituée, essentiellement d'un corps 81 et d'un support 82 séparés par des billes 83 par exemple trois de manière à constituer une articulation sphérique. Les billes 83 reposent entre un cône femelle du corps 81 et une portée sphérique mâle du support 82. Un poussoir central à ressort 84 définit le centre de rotation et l'orientation est réglée et fixée à l'aide de trois vis à ressort 85 équidistantes. Cette articulation sphérique permet donc d'assurer le retour de la lumière ayant traversée deux fois la tête de mesure, dans la fibre optique. Ce réglage est réalisé une fois avant les expériences, il peut être repris en cas de déréglage.

Tous les constituants métalliques sont, par exemple, faits en Invar supérieur, la cale en aluminium AUG4 et la céramique piézo-électrique porte la référence P.249.2 chez PHYSIK INSTRUMENTE.

La configuration de la cellule proprement dite est choisie de manière à ne pas pratiquement perturber l'écoulement dans la veine de mesure. Cette configuration ressort de l'examen des Fig. 4 et Fig.4A. On obtient ainsi une largeur intérieure de l'ordre de 13 mm.

Grâce à la construction choisie on voit qu'il est possible de changer la cellule très facilement et ainsi d'adapter la géométrie et/ou le profil de celle-ci au cas à étudier sans avoir à modifier la totalité du mode de réalisation de la canne sonde selon l'invention.

Cet interféromètre selon l'invention a d'autres applications ; par exemple il peut servir en acoustique pour l'étude des fluctuations de densité dans des écoulements car la masse volumique d'un fluide est directement proportionnelle à son indice de réfraction.

**Revendications**

1. Interféromètre de Michelson à fibres optiques pour mesurer la température d'un fluide en écoulement où un bras émetteur (10) excité par une source lumineuse (11) et un bras récepteur (20) associé à un photodétecteur (21) sont réunis par un coupleur optique (50) pour former un bras de référence (30) et un bras de mesure (40) terminé par un capteur (41) du phénomène physique à évaluer où ce bras de référence (30) et ce bras de mesure (40) sont constitués par une seule et même fibre optique monomode pour véhiculer seulement une onde de référence et une onde de mesure interférente(s) ensemble (30/40) dont le dioptre de l'extrémité (31) opposée au coupleur optique (50) sert de miroir partiellement transparent réfléchissant moins que la moitié de l'onde optique de référence incidente et est accouplé au capteur (41) qui renvoie l'onde optique de mesure au travers du dioptre caractérisé en ce que le capteur (41) comprend une cellule (411) creuse et ouverte qui présente deux faces opposées délimitées par des dioptres (4110) transparents qui sont parallèles entre eux et entre lesquels est reçue au moins une partie du fluide en écoulement et un miroir (412) parallèle à l'extrémité (31) de la fibre optique pour renvoyer l'onde optique de mesure au travers du dioptre de cette extrémité (31), cette cellule (411) étant interposée entre cette extrémité (31) de la fibre optique et ce miroir (412) et ayant une longueur constante indépendante des variations thermiques.

2. Interféromètre selon la revendication 1, caractérisé en ce qu'une cale de compensation (4132) dont l'épaisseur est calculée afin d'annuler les variations thermiques de la cellule (411), est interposée derrière ce miroir (412) qu'elle porte.

3. Interféromètre selon la revendication 2 où un modulateur de phase (413) est fixé à cette cale de compensation (4132) en un point de la face opposée à celle portant le miroir (412) et où ce point est tel que l'ensemble modulateur-miroir (413, 412) réalise intrinsèquement une compensation des variations thermiques de la longueur physique du trajet séparant les deux dioptres (4110) de la cellule (411).

4. Interféromètre selon l'une quelconque des revendications 1 à 3, caractérisé en ce qu'un élément optique (311) est interposé entre cette extrémité (31) de la fibre optique et le capteur (41).

5. Interféromètre selon la revendication 4, caractérisé en ce que cet élément optique est une lentille remplissant la fonction de collimation du type "Selfoc".

6. Interféromètre selon l'une quelconque des revendications 1 à 5, caractérisé en ce que ce miroir (412) est porté par un modulateur de phase (413).

7. Interféromètre selon la revendication 6, caractérisé en ce que ce modulateur de phase (413) est une céramique piézo-électrique (4131).

8. Interféromètre selon l'une quelconque des revendications 6 et 7, caractérisé en ce que ce modulateur de phase (413) est alimenté par un générateur basse fréquence (70).

9. Interféromètre selon l'une quelconque des revendications 1 à 8, caractérisé en ce que le photodétecteur (21) est associé à un circuit électrique (60) pour extraire du signal engendré par ce photo-détecteur (21) sa composante dont la fréquence est double de celle du générateur basse fréquence (70), pour mesurer l'intensité de cette composante, pour la mettre en forme et pour la réinjecter au modulateur afin de compenser l'évolution du trajet optique de la cellule (411) de manière à obtenir une détection synchrone à zéro dynamique.

10. Interféromètre selon l'une quelconque des revendications 1 à 9, caractérisé en ce que ce capteur (41) est placé dans un fluide en écoulement.

11. Interféromètre selon la revendication 10, caractérisé en ce que cet écoulement fluide circule dans la cellule (411) entre ses deux dioptres (4110).

12. Interféromètre selon l'une quelconque des revendications 10 ou 11, caractérisé en ce que cet écoulement fluide est un gaz tel que de l'air sec ou de la vapeur d'eau.

13. Application de l'interféromètre selon l'une quelconque des revendications 1 à 12 à la mesure des températures.

14. Application de l'interféromètre selon l'une quelconque des revendications 1 à 13 à la mesure des températures dans les turbomachines.

**Patentansprüche**

1. Michelson-Interferometer mit optischen Fasern zum Messen der Temperatur eines fließenden Fluides, bei dem ein Senderzweig (10), der von einer Lichtquelle (11) angeregt wird, und ein Empfängerzweig (20), der einem Photodetektor (21) zugeordnet ist, über einen optischen Koppler (50) verbunden sind, um einen Bezugszweig (30) und einen Meßzweig (40) zu bilden, der in einem Meßfühler (41) für eine physikalische Größe endet, wobei der Bezugszweig (30) und der Meßzweig (40) aus ein und derselben optischen Monomodenfaser (30, 40) bestehen, um nur eine Bezugswelle und eine Meßwelle zu führen, die miteinander interferieren, wobei der Enddiopter (31), der dem optischen Koppler (50) gegenüberliegt, ein halbdurchlässiger Spiegel ist, der wenigstens der Hälfte der optischen einfallenden und am Fühler (41) liegenden Bezugswelle reflektiert, der die optische Meßwelle durch den Diopter zurückleitet, dadurch gekennzeichnet, daß der Fühler (41) eine vertiefte und offene Zelle (411), die zwei gegenüberliegende Flächen hat, die von transparenten Dioptern (4110) begrenzt sind, die parallel zueinander angeordnet sind und zwischen denen wenigstens ein Teil des strömenden Fluides aufgenommen ist, und einen Spiegel (412) umfaßt, der zum Ende (31) der optischen Faser parallel ist, um die optische Meßwelle durch den Diopter an diesem Ende (31) zurückzuführen, wobei die Zelle (411) zwischen diesem Ende (31) der optischen Faser und dem Spiegel (412) angeordnet ist und eine konstante Länge, unabhängig von thermischen Änderungen hat.

2. Interferometer nach Anspruch 1, dadurch gekennzeichnet, daß eine Kompensationsscheibe (4132), deren Dicke so berechnet ist, daß die thermischen Änderungen der Zelle (411) kompensiert werden, hinter dem Spiegel (412) angeordnet ist, der die Scheibe trägt.

3. Interferometer nach Anspruch 2, bei dem ein Phasenmodulator (413) an der Kompensationsscheibe

(4132) an einer Stelle der Stirnfläche befestigt ist, die der Fläche gegenüberliegt, die den Spiegel (412) trägt, und bei dem diese Stelle so gewählt ist, daß die Anordnung aus Modulator und Spiegel (413, 412) in sich eine Kompensation der thermischen Variationen der physikalischen Länge der Strecke bewirkt, die die beiden Diopter (4110) der Zelle (411) trennt.

4. Interferometer nach einem der Ansprüche 1 bis 3, dadurch gekennzeichnet, daß ein optisches Element (311) zwischen dem Ende (31) der optischen Faser und dem Fühler (41) angeordnet ist.

5. Interferometer nach Anspruch 4, dadurch gekennzeichnet, daß daß optische Element eine Linse ist, die eine Kollimatorfunktion vom Typ "Selfoc" erfüllt.

6. Interferometer nach einem der Ansprüche 1 bis 5, dadurch gekennzeichnet, daß der Speigel (412) von einem Phasenmodulator (413) gehalten ist.

7. Interferometer nach Anspruch 6, dadurch gekennzeichnet, daß der Phasenmodulator (413) eine piezoelektrische Keramik (4131) ist.

8. Interferometer nach einem der Ansprüche 6 und 7, dadurch gekennzeichnet, daß der Phasenmodulutor (413) von einem Niederfrequenzgenerator (70) versorgt wird.

9. Interferometer nach einem der Ansprüche 1 bis 8, dadurch gekennzeichnet, daß der Photodetektor (21) einer elektrischen Schaltung (60) zugeordnet ist, um dem vom Photodetektor (21) ezeugten Signal die Komponente zu entnehmen, deren Frequenz doppelt so groß wie die des Niederfrequenzgenerators (70) ist, um die Stärke dieser Komponente zu messen und sie zu formen und zum Modulator rückzukoppeln, damit eine Veränderung dur optischen Strecke der Zelle (411) so kompensiert wird, daß eine synchrone Erfassung ohne Dynamik erhalten wird.

10. Interferometer nach einem der Ansprüche 1 bis 9, dadurch gekennzeichnet, daß der Fühler (41) in einem strömenden Fluid angeordnet ist.

11. Interferometer nach Anspruch 10, dadurch gekennzeichnet, daß das strömende Fluid in der Zelle (411) zwischen den beiden Dioptern (4110) zirkuliert.

12. Interferometer nach einem der Ansprüche 10 und 11, dadurch gekennzeichnet, daß das strömende Fluid ein Gas wie beispielsweise trockene Luft oder Wasserdampf ist.

13. Verwendung eines Interferometers nach einem der Ansprüche 1 bis 12 zum Messen von Temperaturen.

14. Verwendung eines Interferometers nach einer der Anspruche 1 bis 13 zum Messen der Temperaturen in Turbomaschinen.

**Claims**

1. Optical fibre Michelson interferometer for measuring the temperature of a flowing fluid in which an emitting arm (10) excited by a light source (11) and a receiving arm (20) associated with a photodetector (21) are joined by an optical coupler (50) form a reference arm (30) and a measurement arm (40) terminated by a sensor (41) for the physical phenemenon to be evaluated, where said reference arm (30) and said measurement arm (40) are constituted by the same monomode optical fibre for carrying only a reference wave and an interfering measurement wave (30/40), whereof the diopter of the end (31) opposite to the coupler (50) serves as a partly transparent mirror reflecting less than half the optical incident reference wave and is coupled to the sensor (41) which reflects the optical measurement wave through the diopter, characterized in that the sensor (41) comprises a hollow, open cell (411), which has two opposite faces defined by transparent diopters (4110), which are parallel to one another and between which is received at least part of the flowing fluid and a mirror (412) parallel to the ends (31) of the optical fibre for reflecting the optical measurement wave across the diopter of said end (31), said cell (411) being interposed between said optical fibre end (31) and said mirror (412) and having a constant length independent of heat variations.

2. Interferometer according to claim 1, characterized in that a compensating shim (4132), whose thickness is calculated so as to cancel out the heat variations of the cell (411), is interposed behind the mirror (412) which it carries.

3. Interferometer according to claim 2, in which a phase modulator (413) is fixed to the compensating shim (4132) at a point of the face opposite to that carrying the mirror (412) and in which said point is such that the modulator — mirror assembly (413, 412) intrinsically carries out a compensation of the heat variations of the physical length of the path separating the two diopters (4110) from the cell (411).

4. Interferomefer according to any one of the claims 1 to 3, characterized in that an optical element (311) is interposed between the said optical fibre end (31) and the sensor (41).

5. Interferometer according to claim 4, characterized in that the said optical element is a lens, which fulfils the collimation function of the Selfoc type.

6. Interferometer according to any one of the claims 1 to 5, characterised in that the mirror (412) is carried by a phase modulator (413).

7. Interferometer according to claim 6, characterized in that the phase modulator (413) is a piezoelectric ceramic (4131).

8. Interferometer according to any one of the claims 6 and 7, characterized in that the phase modulator (413) is supplied by a low frequency generator (70).

9. Interferometer according to any one of the claims 1 to 8, characterized in that the photodetector (21) is associated with an electrical circuit (60) for extracting from the signal produced by said photodetector (21) its component whose frequency is double that of the low frequency generator (70), in order to measure the intensity of said component, for shaping the same and for reinjecting it into the modulator so as to compensate the evolution of the optical path of the cell (411), so as to obtain a zero dynamics synchronous detection.

10. Interferometer according to any one of the claims 1 to 9, characterized in that the sensor (41) is placed in a flowing fluid.

11. Interferometer according to claim 10, characterized in that said fluid flow circulates in the cell (411) between its two diopters (4110).

12. Interferometer according to any one of the claims 10 or 11, characterized in that said fluid flow is a gas such as dry air or steam.

13. Application of the interferometer according to any one of the claims 1 to 12, to the measurement of temperature.

14. Application of the interferometer according to any one of the claims 1 to 13, to the measurement of temperatures in fluid flow engines.

FIG.1

FIG.2

## FIG. 3

FIG.4

FIG.4A